# EUROPEAN PATENT APPLICATION

(11) **EP 3 682 741 A1**
(43) Date of publication of application: **22.07.2020**
(21) Application number: 20152415.4
(22) Date of filing: 17.01.2020
(51) Int. Cl.: A23C 19/06, A23C 19/068

(54) **MOZZARELLA CHEESE**

(30) Priority: 18.01.2019 JP 2019006797
(71) Applicant: Takanashi Milk Products Co., Ltd., Kanagawa 241-0023 (JP)
(72) Inventor: Yamazaki, Kazuyuki, Kanagawa, 2410023 (JP); Nakajima, Kenji, Kanagawa, 2410023 (JP); He, Fang, Kanagawa, 2410023 (JP); Sato, Masayuki, Kanagawa, 2410023 (JP); Hiramatsu, Masaru, Kanagawa, 2410023 (JP)
(74) Representative: Schulz Junghans Patentanwälte PartGmbB

(57) **Abstract**

The invention relates to Mozzarella cheese, characterized in that a raw material thereof is a cheese curd having a water retention property with water output of 8 ml per 100g or less and having a degree of protein decomposition of 1.1 or more. The invention further relates to a method for reducing a hardness of mozzarella cheese, comprising the step of rendering a hardness of mozzarella cheese cooled after heating 0.6 kgf or less by using a cheese curd having a water retention property with water output of 8 ml or less per 100g, and having a degree of protein decomposition of 1.1 or more.

## Description

### Technical Field

The present invention relates to mozzarella cheese and a method of producing mozzarella cheese.

### Background Art

Mozzarella cheese is a type of cheese produced for example by curdling milk, the raw material, with rennet to obtain curdled milk, separating the curdled milk into cheese curds and whey, and kneading the cheese curds while heating (Non-Patent Document 1).

Mozzarella cheese in its nature has a mild taste with no characteristic flavor and has a unique springy texture. Such nature of mozzarella cheese makes it ideal for use in heated dishes such as Pizza Margherita and grilled foil packets with cheese, in addition to salads such as Insalata Caprese.

### Patent Documents

### Non-Patent Documents

Non-Patent Document 1: Non-Profit Organization Association of Cheese Professionals, "Science of Cheese," 2016

### Disclosure of the Invention

### Problems to be solved by the Invention

However, mozzarella cheese has an unfavorable aspect in that it develops a rubber-like gummy or hard texture that feels lumpy in the mouth as it gets cold after cooking.

Accordingly, it is an objective of the present invention to provide mozzarella cheese that develops less gummy or hard textures even when it gets cold after cooking, as well as a method of producing such mozzarella cheese.

### Means of Solving the Problems

During the course of intensive studies to achieve the above-described objective, the present inventors have speculated that hardening of mozzarella cheese when it gets cold after cooking may be caused by the low water retention property of mozzarella cheese that causes water to exude from the cheese during cooking. The present inventors also have speculated that when this cheese gets cold after cooking, the casein micelles composing the mozzarella cheese may be strongly bonded together, making the cheese hard. This speculation has led the present inventors to contemplate that if mozzarella cheese is provided that has high water retention and contains weakly bonded casein micelles, such cheese will not harden even when it gets cold after cooking.

Based on this idea, the present inventors have found, after repeated trial and error, that surprisingly, mozzarella cheese made by using cheese curds having a specific water retention property and a specific degree of protein decomposition remains soft even when it gets cold after cooking and has favorable textures.

The present inventors have eventually succeeded in devising mozzarella cheese that has reduced gummy or hard textures even when it gets cold after cooking. It is these findings and successful examples that have ultimately led to completion of the present invention.

Accordingly, one aspect of the present invention provides mozzarella cheese and manufacturing methods thereof as described in the following [1] to [4]:
[1] mozzarella cheese, characterized in that a raw material thereof is a cheese curd having a water retention property as measured by water output of 8 ml or less per 100g, and having a degree of protein decomposition of 1.1 or more;
[2] mozzarella cheese according to claim 1, characterized in that the mozzarella cheese has a hardness of 0.6 kgf or less when the hardness is measured for the mozzarella cheese cooled after heating;
[3] a method of producing mozzarella cheese, comprising the step of heating and kneading a cheese curd having a water retention property as measured by water output of 8 ml or less per 100g, and having a degree of protein decomposition of 1.1 or more to obtain mozzarella cheese; and
[4] a method for reducing the hardness of mozzarella cheese, comprising the step of enabling a hardness of mozzarella cheese to become 0.6 kgf or less by using a cheese curd having a water retention property as measured by water output of 8 ml or less per 100g, and having a degree of protein decomposition of 1.1 or more, wherein the hardness is measured when the mozzarella cheese gets cold after heating.

### Advantageous Effects of Invention

According to mozzarella cheese in one embodiment of the present invention, not only uncooked dishes such as Insalata Caprese, but also cooked dishes such as Pizza Margherita and grilled foil packets with cheese can be made highly tasty dishes.

According to a method in one embodiment of the present invention, the use of a specific cheese curd enables production of mozzarella cheese of one embodiment of the present invention in a simple manner and on an industrial scale, as well as reduction of hardness of mozzarella cheese as measured when the cheese gets cold after heating.

### Brief Description of the Drawings

FIG. 1A shows the results of a test performed for the water retention property of cheese curd A over time during cold storage as described in Examples below.
FIG. 1B shows the results of a test performed for the water retention property of cheese curd B over time during cold storage as described in Examples below.
FIG. 2 shows the results of a test performed for the protein decomposition of cheese curd B over time during cold storage as described in Examples below.

### Description of Embodiments

While mozzarella cheese and methods for manufacture thereof in one embodiment of the present invention will now be described in further details, the scope of the present invention is not limited to what is described in this section; rather, the present invention may take various other forms to the extent that its objectives are achieved.

Unless otherwise specified, each term used herein is used in the meaning commonly used by those skilled in the art and should not be construed to have any meaning that is unduly limiting. Also, any speculation or theory is made herein on the basis of the knowledge and experiences of the present inventors and as such, the scope of the present invention is not bound by any such speculations or theories.

The term "and/or" as used herein means any one of, or any combination of two or more of, or combination of all of listed related items.

The term "content" as used herein is equivalent to "concentration" and means the proportion of a component relative to the total amount of a composition containing the component. It should be noted, however, that the total amount of the contents of components do not exceed 100%.

The symbol "-" when used herein to indicate a range of values is intended to include values preceding and following the symbol; for example, "0 wt% to 100 wt%" means a range from 0 wt% or more and 100 wt% or less.

Mozzarella cheese in one embodiment of the present invention is characterized by the use of particular cheese curds as a raw material.

Mozzarella cheese may be any commonly known mozzarella cheese and is not particularly limited; for example, it may be cheese obtained by curdling milk components with rennet to form cheese curds, heating and kneading the cheese curds, and then shaping the kneaded curds into cheese, which is a type of fresh cheese produced without aging.

Mozzarella cheese has soft springiness and stretches considerably upon heating. For other characteristic properties of mozzarella cheese, reference is to be made to 2. DESCRIPTION in CODEX STAN 262-2006, CODEX STANDARD FOR MOZZARELLA by Codex Alimentarius Commission (CODEX) of World Health Organization (WHO) and Food and Agriculture Organization (FAO) of the United Nations.

The cheese curds for use as a raw material for mozzarella cheese in one aspect of the present invention have a specific water retention property and a specific degree of protein decomposition. By use of such cheese curds as a raw material, the mozzarella cheese can exhibit soft favorable texture even when the mozzarella cheese is used for cooked dishes and even after the dishes get cold.

The water retention property of cheese curds can be measured and determined according to the method described in "2-1. Water Retention Test for Cheese Curds" in Examples below. Specifically, the water retention property of cheese curds can be evaluated by the amount of water obtained by cutting up and heating the cheese curds, and subsequently subjecting the heated curds to centrifugation (i.e., water output).

The water retention property of 100g of the cheese curds may be any value of 8 ml or less as measured by their water output and its lower limit is not particularly limited; for example, the water retention property may be substantially 0 ml as measured by the water output. Since a smaller water output can indicate a better water retention property, 100g of cheese curds preferably have a water retention property of 0 ml to 7 ml as measured by water output, more preferably a water retention property of 0 ml to 6 ml as measured by water output, and even more preferably a water retention property of 0 ml to 4 ml as measured by water output.

The degree of protein decomposition of cheese curds can be measured and determined according to the method described in "2-2. Protein Decomposition Test for Cheese Curds" in Examples below. The degree of protein decomposition of cheese curds can be determined by mixing up cut cheese curds, homogenizing the curds while heating, adjusting the pH to an acidic condition, and filtrating the curds and measuring the absorbance of the filtrate at 280 nm. Specifically, the measured absorbance of 1.1 corresponds to a degree of protein decomposition of 1.1.

The degree of protein decomposition of cheese curds may be any value of 1.1 or higher and its upper limit is not particularly limited; however, it is preferably 1.8 or lower since a higher degree of protein decomposition can degrade the unique springy texture of mozzarella cheese. Thus, the cheese curds preferably have a degree of protein decomposition in a range of 1.1 to 1.8, more preferably in a range of 1.1 to 1.6, and still more preferably in a range of 1.2 to 1.4.

Specific examples of the cheese curds for use as a raw material for mozzarella cheese in one embodiment of the present invention include, but are not limited to, cheese curds having a water retention property as measured by water output in a range of 0 to 8 ml per 100g, and a degree of protein decomposition in a range of 1.1 to 1.8, cheese curds having a water retention property as measured by water output in a range of 0 to 6 ml per 100g, and a degree of protein decomposition in a range of 1.1 to 1.6, and cheese curds having a water retention property as measured by water output in a range of 0 to 4 ml per 100g, and a degree of protein decomposition in a range of 1.2 to 1.4.

The method of producing cheese curds for use as a raw material for mozzarella cheese in one aspect of the present invention is not particularly limited as long as it is any suitable method as described above that can produce cheese curds having a specific water retention property and a specific degree of protein decomposition. Examples of methods of producing cheese curds include those described in "1-1. Production of Cheese Curds" in Examples below. Types and amounts of raw milk and rennet used, presence or absence or amounts of other additives such as antibiotics, conditions such as frequency and timings of sterilization and Lactobacillus fermentation, techniques used for separating cheese curds from whey, or the like may be modified and adjusted as desired by those skilled in the art.

It should be noted, however, that the cheese curds immediately after their production according to the methods described in Examples below are not the cheese curds having a specific water retention property and a specific degree of protein decomposition. The cheese curds having a specific water retention property and a specific degree of protein decomposition can be obtained, for example, by cold storage of the cheese curds produced according to the methods described in Examples below or any standard method and by extending the storage period if necessary.

The storage period for cooling the cheese curds may be any length of period that gives the specific water retention property and the specific degree of protein decomposition to the cheese curds and is not particularly limited; for example, the storage period is 35 days or longer, preferably 40 days or longer, more preferably 45 days or longer, and still more preferably 50 days or longer for the cheese curds produced according to the methods described in Examples below. The maximum length of the storage period for cooling the cheese curds is preferably 70 days or less, more preferably 60 days or less, and still more preferably 55 days or less in view of the degree of protein decomposition of the cheese curds.

Examples of embodiments of the methods of producing cheese curds to serve as a raw material of mozzarella cheese in one embodiment of the present invention include, but are not limited to, a method including the steps of sterilizing freshly milked raw milk, followed by cooling to obtain sterilized cold milk; adding Lactobacillus and salts such as calcium chloride to the sterilized cold milk and subsequently maintaining the milk at a temperature suitable for the growth of Lactobacillus to promote lactic fermentation to obtain fermented milk; adding rennet to the fermented milk and subsequently carrying out a curdling process by maintaining the mixture at a temperature at which rennet causes curdling to obtain curdled milk; cutting the curdled milk to separate and remove some of the whey and further subjecting the curdled milk sequentially to a heating process, a pre-squeeze process, and a second fermentation process to obtain a fermented product; shaping and cooling the fermented product and subsequently subjecting the fermented product to an immersion process using brine to obtain cheese curds; and packaging the cheese curds and subsequently storing the packaged cheese curds in a refrigerator at 4°C to 8°C over 35 days to 70 days to obtain cheese curds having a specific water retention property and a specific degree of protein decomposition.

The mozzarella cheese in one embodiment of the present invention that is produced by using the cheese curds, as raw material, having a specific water retention property and a specific degree of protein decomposition exhibits favorable soft textures even after it gets cold after heating. The texture of mozzarella cheese in one embodiment of the present invention can be evaluated by the hardness of the cheese when it gets cold after heating as measured and determined according to the method described in "2-4. Hardness test of Mozzarella Cheese" in Examples below. The hardness of mozzarella cheese can be expressed by the value of the hardness of Mozzarella cheese measured by a rheometer when it gets cold after heating.

The hardness that the mozzarella cheese has when it gets cold after heating is preferably 0.6 kgf or less, specifically 0.64 kgf or less, more preferably 0.50 kgf or less, still more preferably 0.30 kgf or less, and even more preferably 0.25 kgf or less since Mozzarella cheese that has a hardness more than 0.6 kgf when it gets cold after heating tends to feel gummy and hard. The minimum value of the hardness that the mozzarella cheese has when it gets cold after heating is preferably 0.10 kgf or more in order for the cheese to exhibit appropriate springiness.

Other physicochemical properties of the mozzarella cheese in one embodiment of the present invention, such as water content, protein content, fat content and pH, are comparable to mozzarella cheese on the market.

The mozzarella cheese in one aspect of the present invention can be produced by using cheese curds having a specific water retention property and a specific degree of protein decomposition and according to standard methods. For example, the mozzarella cheese in one aspect of the present invention can be produced by a method such as including the step of heating and kneading the cheese curds having a specific water retention property and a specific degree of protein decomposition to obtain mozzarella cheese. However, the method of producing mozzarella cheese in one aspect of the present invention is not limited to such a method.

Examples of embodiments of a method of producing mozzarella cheese in one embodiment of the present invention include, but are not limited to, a method including the step of manually or mechanically kneading cheese curds having a specific water retention property and a specific degree of protein decomposition while or after heating with steam or warm water to obtain mozzarella cheese.

Another embodiment of the present invention is a method of producing mozzarella cheese according to certain embodiments of the invention. The method of producing mozzarella cheese in one embodiment of the present invention includes at least the step of obtaining mozzarella cheese by heating and kneading a cheese curd having a specific water retention property and a specific degree of protein decomposition, that is, a cheese curd having a water retention property as measured by water output of 8 ml or less and having a degree of protein decomposition of 1.1 or more.

Another embodiment of the present invention is a method for reducing the hardness of mozzarella cheese. The method for reducing the hardness of mozzarella cheese in one embodiment of the present invention includes at least the step of obtaining mozzarella cheese by using a cheese curd having a water retention property as measured by water output of 8 ml/100g or less, and having a degree of protein decomposition of 1.1 or more, such that the hardness of the resulting mozzarella cheese as measured when it gets cold after heating is 0.6 kgf or less. Since the textures of the resulting mozzarella cheese can be improved by providing mozzarella cheese with a hardness when it gets cold after heating of 0.6 kgf or less, the method for reducing the hardness of mozzarella cheese in one embodiment of the present invention may also be considered as a method for improving the texture of mozzarella cheese.

The method of in one embodiment of the present invention may include various other steps or manipulations before, after, or during the above-described steps as long as the objectives of the present invention can be achieved.

The mozzarella cheese in one embodiment of the present invention can be used either alone or in combination with a variety of food materials for preparing cooked or uncooked dishes. Food items using mozzarella cheese in one embodiment of the present invention retain reduced gummy or hard textures derived from mozzarella cheese has reduced even when they get cold after cooking and are thus useful for preparing for example boxed lunch.

The present invention will now be described in further detail with reference to the following Examples, which are not intended to limit the present invention. The present invention may take various forms to the extent that the objectives of the present invention are achieved.

### Examples

### [Example 1. Production of Cheese Curds and Mozzarella Cheese]

### 1-1. Production of Cheese Curds

Freshly milked raw milk was sterilized successively at 74°C for 15 seconds and at 74°C for 20 seconds. The sterilized milk was then placed in an OST vat for cheese curd production and cooled to 30 to 35°C. To the cooled milk, lactobacillus and calcium chloride were added and fermentation was carried out while maintaining the temperature of the milk at 35.0°C until the pH of the milk was approximately 6.4 (or approximately one hour) to obtain fermented milk.

To the fermented milk, microbial rennet ("Fromase™", manufactured by DSM) was added and the temperature of the fermented milk was maintained at 35°C to obtain curdled fermented milk.

The curdled milk was cut up to separate and remove some of whey, leaving a mixture of cheese curds and whey. The resulting mixture was immersed in warm water at 45°C and was then subjected to pre-squeezing. The squeezed product was subsequently subjected to second fermentation until the pH of the remaining whey was 5.4. The resulting fermented product was shaped and cooled to 12°C, followed by immersion in a 20 w/v% saturated aqueous sodium chloride solution for 4 to 8 hours to obtain cheese curds.

The resulting cheese curds were packaged and stored in a refrigerator at 6°C. After a 24-hour cold storage period, the cheese curds had a pH of 5.3 to 5.7 and a water content of 42 to 46%.

The cold-stored cheese curds were subjected over time to Water Retention Test and Protein Decomposition Test.

### 1-2. Production of Mozzarella Cheese

The cheese curds were heated by steaming and were then stretched to obtain mozzarella cheese.

### [Example 2. Characterization Evaluation of Cheese Curds and Mozzarella Cheese]

### 2-1. Water Retention Test of Cheese Curds

The cheese curds were diced with a knife and were further cut up in a mixer. 100 g of the cut cheese curds were placed in a centrifuge tube and were left to stand for two hours in an oven warmed to 60°C. The warmed centrifuge tube was centrifuged at 12,500G, 25°C, for 1 hour and 15 minutes. Following the centrifugation, the resulting supernatant was transferred to a centrifuge tube and was centrifuged at 3,000 rpm for 10 minutes. The volume of separated water (i.e., water output) was read from the graduation of the centrifuge tube.

### 2-2. Protein Decomposition Test of Cheese Curds

The cheese curds were cut to quarter size and sliced. The slices were then chopped into 5-mm size. The chopped cheese curds were thoroughly mixed on a cutting board. 10.0 g of the mixed cheese curds were placed into a vial of a homogenizer, which was followed by addition of ion-exchanged water at 60°C to make a total amount of 100 g.

The cheese curds and water placed in the vial were homogenized on a homogenizer at 10,000 rpm for one minute. Subsequently, the resulting homogenate was transferred to a 200 ml beaker. While the homogenate was stirred with a stirrer, 1N HCl was added dropwise to adjust the pH to 4.6.

The pH-adjusted homogenate was left to stand in a refrigerator at 4°C for one hour. Subsequently, the homogenate was filtered through pleated filter paper (5A, 150 mm) to obtain a filtrate. The resulting filtrate was further filtered through a filter with a 0.45 µm pore size. The absorbance of the resulting filtrate at 280 nm was then measured on a spectrophotometer. The measured value was used as a measure of the degree of protein decomposition. Ion-exchanged water was used as the blank in measurement of the absorbance.

### 2-3. Physical Property Test of Cheese Curds and Mozzarella Cheese

The water content, fat content, protein mass and pH of cheese curds and mozzarella cheese were determined on a cheese analyzer ("FoodScan 2 Dairy," manufactured by FOSS).

### 2-4. Hardness Test of Mozzarella Cheese

50 g of mozzarella cheese placed in a 200 ml glass beaker was heated in a microwave at 600W for 120 seconds to melt the cheese. The molten cheese was 15 mm in thickness.

The molten cheese was allowed to cool for about 10 minutes at room temperature. Once the temperature of the cheese decreased to 40°C to 45°C, the hardness was measured using a rheometer ("FUDOH RHEOMETER RTC-3002," manufactured by RHEOTEC). The settings of the rheometer were as follows: plunger, 20 mmΦ; penetration distance, 0.5 mm; Max 2 k / 20 N. Due to the deviation in hardness at different points of measurement, measurements were taken at three different points and the average was taken to give the hardness.

### 2-5. Test Results and Evaluation of Cheese Curds

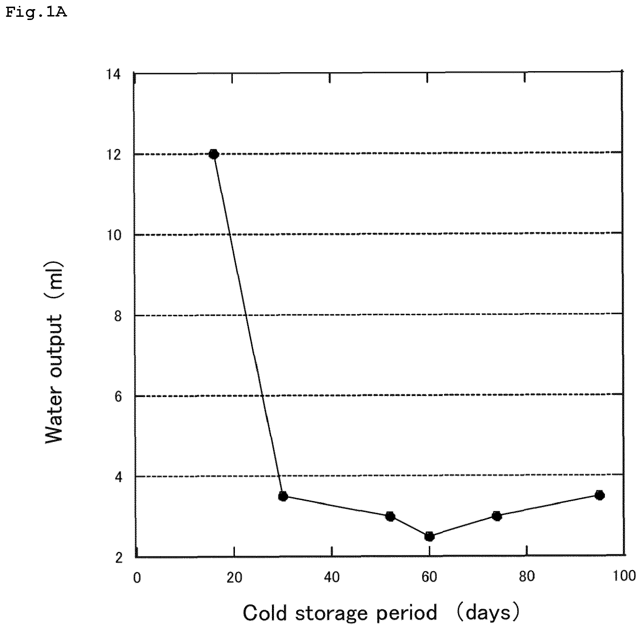

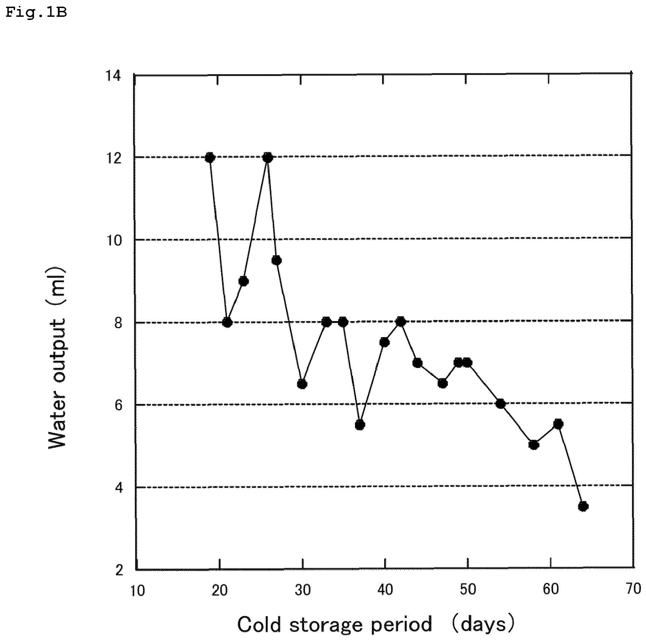

FIGS. 1A and 1B show the results of Water Retention Test conducted over time for two types of cheese curds: Cheese Curd A and Cheese Curd B during the cold storage period, respectively, the Cheese Curds A and B having been obtained using the method described in 1-1 in Example 1.

As shown in Figs. 1A and 1B, the water output was consistently 8 ml or less for cheese curds stored for 30 days or a longer period during the cold storage period.

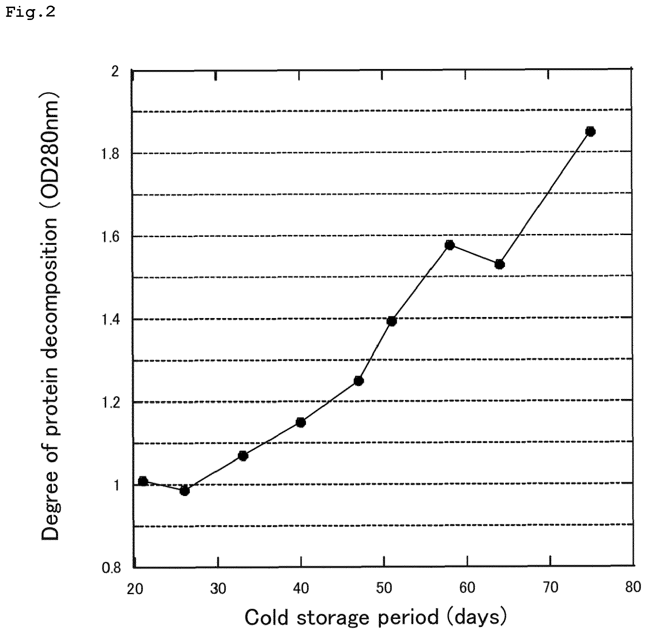

Fig. 2 shows the results of Protein Decomposition Test conducted over time for Cheese Curd B during the cold storage period.

As shown in Fig. 2, the degree of protein decomposition was consistently beyond 1.1 for cheese curds stored for 40 days or a longer period during the cold storage period.

These results indicate that the cheese curds stored for 40 days or a longer period during the cold storage period had a water output of 8ml or less and a degree of protein decomposition of 1.1 or higher.

### 2-6. Test Results and Evaluation of Mozzarella Cheese

Mozzarella cheese samples of Examples 1 and 2 were prepared using cheese curds obtained by cold storage periods of 43 days and 50 days of Cheese Curd B according to the methods described in 1-2 in Example 1, respectively. Mozzarella cheese samples of Examples 3 and 4 were prepared in a similar manner using cheese curds obtained by cold storage periods of 40 days and 46 days of Cheese Curd C produced according to the method described in 1-1 in Example 1, respectively. Mozzarella cheese sample of Comparative Example 1 was prepared in a similar manner using cheese curds obtained by a cold storage period of 32 days of Cheese Curd D produced according to the method described in 1-1 in Example 1. Mozzarella cheese sample of Comparative Example 2 was prepared in a similar manner using commercially available cheese curds ("NISKY" (Cagilata 45% F. i. Tr. Block), manufactured by Molkerei Niesky).

The hardness and the physical properties were determined for the mozzarella cheese samples of Examples 1 to 4 and Comparative Examples 1 and 2. The results for hardness are shown in Table 1 below.

**Table 1**

| | Comp. Ex. 1 | Comp. Ex. 1 | Ex. 1 | Ex.2 | Ex. 3 | Ex. 4 |
|---|---|---|---|---|---|---|
| Cold storage period (Days) | 32 | - | 43 | 50 | 40 | 46 |
| Hardness of mozzarella cheese (Kgf) | 0.67 | 0.97 | 0.22 | 0.23 | 0.18 | 0.18 |

As shown in Table 1, the mozzarella cheese samples prepared by using cheese curds obtained by a 40-day or longer cold storage period, which are cheese curds having a water output of 8ml or less and a degree of protein decomposition of 1.1 or higher, had a lower hardness and were thus softer when they got cold after heating as compared to the mozzarella cheese samples of Comparative Examples 1 and 2. In addition, the mozzarella cheese samples of Examples 1 to 4 had physical properties comparable to commonly sold mozzarella cheese.

The mozzarella cheese samples were also evaluated in a sensory test for their textures when they got cold after heating. As it turned out, the mozzarella cheese samples of Comparative Examples 1 and 2 were rated as having a gummy or hard texture, whereas the mozzarella cheese samples of Examples 1 to 4 were rated as not having such textures and as having soft favorable textures.

Thus, it has been demonstrated that the mozzarella cheese made by using cheese curds having a water output of 8 ml or less and a degree of protein decomposition of 1.1 or higher can retain soft and favorable textures when it is used in cooked dishes.

### Industrial Applicability

According to the present invention, mozzarella cheese that can be used either alone or in combination with a variety of food materials for preparing cooked or uncooked dishes can be produced and used on an industrial scale.

## Claims

1. Mozzarella cheese, **characterized in that** a raw material thereof is a cheese curd having a water retention property with water output of 8 ml per 100g or less and having a degree of protein decomposition of 1.1 or more.

2. Mozzarella cheese according to claim 1, **characterized in that** the mozzarella cheese has a hardness of 0.6 kgf or less provided that the mozzarella cheese was cooled after heating.

3. A method of producing mozzarella cheese, comprising the step of heating and kneading a cheese curd having a water retention property as measured by water output of 8 ml per 100g or less and having a degree of protein decomposition of 1.1 or more to obtain mozzarella cheese.

4. A method for reducing a hardness of mozzarella cheese, comprising the step of rendering a hardness of mozzarella cheese cooled after heating 0.6 kgf or less by using a cheese curd having a water retention property with water output of 8 ml or less per 100g, and having a degree of protein decomposition of 1.1 or more.
